# EUROPÄISCHE PATENTANMELDUNG

(11) **EP 2 192 365 A2**
(43) Veröffentlichungstag der Anmeldung: **02.06.2010**
(21) Anmeldenummer: 09013917.1
(22) Anmeldetag: 05.11.2009
(51) Int. Cl.: F25J 3/02, C01B 3/50

(54) **Prozess zur Minimierung von Rückführgas in einem Kondensationsprozess**

(30) Priorität: 29.11.2008 DE 102008059716
(71) Anmelder: Linde AG, 80331 München (DE)
(72) Erfinder: Lang, Martin, 80689 München (DE); Klein, Bernd, 80997 München (DE)

(57) **Zusammenfassung**

Die Erfindung betrifft ein Verfahren sowie eine Vorrichtung zur kryogenen Zerlegung eines vorwiegend aus Wasserstoff und Kohlenmonoxid bestehenden Einsatzgases (1), wobei
a) das Einsatzgas (1) abgekühlt und partiell kondensiert wird,
b) das bei der partiellen Kondensation gebildete zweiphasige Stoffgemisch (3) in eine erste wasserstoffreiche Gasfraktion (4) und eine erste kohlenmonoxidreiche, Wasserstoff enthaltende Flüssigfraktion (5) getrennt wird,
c) die erste wasserstoffreiche Gasfraktion (6) entspannt wird,
d) die erste kohlenmonoxidreiche, Wasserstoff enthaltende Flüssigfraktion (5) in wenigstens zwei Schritten kaskadenartig entspannt wird (a,b,c), wobei jeweils eine wasserstoffreiche Gasfraktion (11,15,19) und eine kohlenmonoxidreiche Flüssigfraktion (12,14,16) erzeugt werden,
e) ein Teil (17) einer kohlenmonoxidreichen Flüssigfraktion (16) entspannt (b) und zur Partialdruckabsenkung mit mindestens einer der bei der kaskadenartigen Entspannung gewonnenen wasserstoffreichen Gasfraktionen (18) gemischt wird,
f) das unter e) erzeugte, vorwiegend aus Wasserstoff und Kohlenmonoxid bestehende Stoffgemisch (20) verdampft, angewärmt und als Rückführgas (29) in das Einsatzgas (1) zurückgeführt wird.

Die erste kohlenmonoxidreiche, Wasserstoff enthaltende Flüssigfraktion (5) wird in wenigstens einem ersten Entspannungsschritt (a) auf einen Druck entspannt, der größer oder gleich ist dem Druck der entspannten ersten wasserstoffreichen Gasfraktion (7), und die bei diesem Entspannungsschritt anfallende wasserstoffreiche Gasfraktion (11) der ersten wasserstoffreichen Gasfraktion (6) nach ihrer Entspannung zugemischt.

## Beschreibung

Die Erfindung betrifft ein Verfahren zur kryogenen Zerlegung eines vorwiegend aus Wasserstoff und Kohlenmonoxid bestehenden Einsatzgases, wobei
a) das Einsatzgas abgekühlt und partiell kondensiert wird,
b) das bei der partiellen Kondensation gebildete zweiphasige Stoffgemisch in eine erste wasserstoffreiche Gasfraktion und eine erste kohlenmonoxidreiche, Wasserstoff enthaltende Flüssigfraktion getrennt wird,
c) die erste wasserstoffreiche Gasfraktion entspannt wird,
d) die erste kohlenmonoxidreiche, Wasserstoff enthaltende Flüssigfraktion in wasserstoffreiche Gasfraktion und eine kohlenmonoxidreiche Flüssigfraktion erzeugt werden,
e) ein Teil einer kohlenmonoxidreichen Flüssigfraktion entspannt und zur Partialdruckabsenkung mit mindestens einer der bei der kaskadenartigen Entspannung gewonnenen wasserstoffreichen Gasfraktionen gemischt wird,
f) das unter e) erzeugte, vorwiegend aus Wasserstoff und Kohlenmonoxid bestehende Stoffgemisch verdampft, angewärmt und als Rückführgas in das Einsatzgas zurückgeführt wird.

Weiterhin betrifft die Erfindung eine Vorrichtung zur Durchführung des Verfahrens.

Ein Verfahren der gattungsgemäßen Art ist beispielsweise aus der Veröffentlichung "H₂-CO-Anlage BASF Ludwigshafen" (W. Bals, R. Fabian, in Linde Berichte aus Wissenschaft und Technik, Nr. 47, 1980, S. 22-25) bekannt, in der die Zerlegung eines zu ca. 60Mol% aus Wasserstoff und ca. 39Mol% aus Kohlenmonoxid bestehenden und Methan und Argon enthaltende Einsatzgases in ein Kohlenmonoxid- und ein Wasserstoffprodukt sowie ein methanreiches Restgas beschrieben wird. Das Einsatzgas wird hierzu gegen anzuwärmende Verfahrensströme bis auf eine Temperatur von etwa -195°C abgekühlt, dabei partiell kondensiert und in einen Hochduckabscheider eingeleitet. Das bei der partiellen Kondensation gebildete zweiphasige Stoffgemisch wird hier in eine Flüssigfraktion, die vorwiegend aus Kohlenmonoxid besteht, jedoch auch Wasserstoff und die höher siedenden Stoffe (Methan, Argon) enthält, und eine überwiegend aus Wasserstoff bestehende Gasfraktion getrennt. Die Gasfraktion wird anschließend aus dem Hochdruckabscheider abgezogen, gegen das Einsatzgas angewärmt, in einer Expansionsturbine kälteleistend auf ca. 25bar entspannt, weiter bis auf Umgebungstemperatur angewärmt und einer Feinreinigung zugeführt, wo sie schließlich zu einem Wasserstoffprodukt aufbereitet wird.

Die Flüssigfraktion aus dem Hochdruckabscheider wird in zwei Schritten jeweils kälteleistend entspannt, wobei der in der Flüssigfraktion gelöste Wasserstoff ausgast und eine weitgehend wasserstofffreie flüssige Kohlenmonoxidfraktion erzeugt wird. Die für den Prozess benötigte Spitzenkälte wird durch die Verdampfung eines Teils der weitgehend wasserstofffreien Kohlenmonoxidfraktion erzeugt. Hierzu wird das Kohlenmonoxid auf ca. 2bar entspannt und mit dem in den beiden Entspannungsschritten ausgegasten Wasserstoff zusammengeführt, der im Weiteren als Rückführstrom bezeichnet wird. Durch die Erniedrigung des Kohlenmonoxidpartialdrucks wird gewährleistet, dass das Kohlenmonoxid bei tiefer Temperatur verdampft. Der verdampfet Rückführstrom wird anschließend angewärmt, verdichtet und in das Einsatzgas zurückgeführt.

Der größte Teil der kohlenmonoxidreichen Flüssigfraktion wird nach dem letzen Entspannungsschritt angewärmt bzw. teilverdampft und zur Abtrennung der höher siedenden Stoffe als Rücklauf am Kopf einer Rektifikationskolonne aufgegeben. Der Rektifikationsdampf wird im Kolonnensumpf durch die kondensierende Einsatzgasfraktion erzeugt. Die höher siedenden Stoffe reichern sich im Kolonnensumpf an und werden mit einem hohen Kohlenmonoxidanteil als Restgas ausgetragen. Wegen der geringen Restgasmenge ist der Verlust an Kohlenmonoxid jedoch gering. Über Kopf wird Kohlenmonoxid mit Produktreinheit aus der Rektifikationskolonne abgezogen, gegen das Einsatzgas angewärmt und an der Anlagengrenze als Produkt abgegeben.

Das beschriebe Verfahren verursacht durch die Rückführung des Rückführgases ins Einsatzgas einen erheblichen Teil der nach dem Stand der Technik bei der Produktion von Wasserstoff und Kohlenmonoxid anfallenden Betriebskosten.

Aufgabe der vorliegenden Erfindung ist es daher, ein Verfahren der gattungsgemäßen Art sowie eine Vorrichtung anzugeben, mit der es möglich ist Wasserstoff und Kohlenmonoxid mit einer im Vergleich zum Stand der Technik kleineren Menge an Rückführgas und damit geringeren Betriebskosten zu produzieren.

Die gestellte Aufgabe wird verfahrensseitig erfindungsgemäß dadurch gelöst, dass die erste kohlenmonoxidreiche, Wasserstoff enthaltende Flüssigfraktion in wenigstens einem ersten Entspannungsschritt auf einen Druck entspannt wird, der größer oder gleich ist dem Druck der entspannten ersten wasserstoffreichen Gasfraktion, und die bei diesem Entspannungsschritt anfallende wasserstoffreiche Gasfraktion der ersten wasserstoffreichen Gasfraktion nach ihrer Entspannung zugemischt wird.

Der Erfindung liegt die Erkenntnis zugrunde, dass die für den Prozess benötigte Spitzenkälte bereits dann erzeugt werden kann, wenn der Kohlenmonoxidpartialdruck weniger weit abgesenkt wird, als dies nach dem Stand der Technik erfolgt. Es ist daher nicht notwendig, die gesamte nach der partiellen Kondensation noch in der Flüssigfraktion verbliebene Wasserstoffmenge zur Verdampfung des Kohlenmonoxids einzusetzen. Dadurch vermindert sich die Menge des Rückführgases, die verdichtet werden muss, um in das Einsatzgas zurückgeführt werden zu können. Verglichen mit dem Stand der Technik reduziert sich daher der zur Verdichtung notwendige Energieaufwand. Da ggf. auch ein kleinerer Verdichter eingesetzt werden kann, ist es möglich, das Rückführgases mit geringeren Betriebs- und Investitionskosten in das Einsatzgas zurückzuführen.

Um den für die Erzeugung der Spitzenkälte benötigten Wasserstoff abzutrennen, wird die kohlenmonoxidreiche, Wasserstoff enthaltende Flüssigfraktion im Anschluss an die partielle Kondensation in einem oder mehreren zusätzlichen Schritten kälteleistend entspannt, wobei die Entspannung in jedem der Schritte auf einen Druck erfolgt, der höher ist als der Druck der ersten wasserstoffreichen Gasfraktion nach ihrer Entspannung und wobei jeweils eine wasserstoffreiche Gas- und eine kohlenmonoxidreiche Flüssigfraktion anfallen. Jede der wasserstoffreichen Gasfraktionen kann aufgrund des herrschenden Druckgefälles ohne zusätzlichen Energieaufwand der ersten wasserstoffreichen Gasfraktion nach ihrer Entspannung zugemischt werden.

Da sich mit jeder zusätzlichen Entspannungsschritt der apparative Aufwand (Abscheider, Leitungen, Drosselorgane) erhöht, sieht eine bevorzugte Ausgestaltung des erfindungsgemäßen Verfahrens vor, dass die Entspannung der ersten kohlenmonoxidreichen, Wasserstoff enthaltenden Flüssigfraktion lediglich in einem Entspannungsschritt auf einen Druck erfolgt, der höher ist als der Druck der ersten wasserstoffreichen Gasfraktion nach ihrer Entspannung.

Das erfindungsgemäße Verfahren weiterbildend, wird vorgeschlagen, den Teil der nach dem letzten Entspannungsschritt anfallenden kohlenmonoxidreichen Flüssigfraktion, der nicht für die Erzeugung von Spitzenkälte benötigt wird zur Abtrennung von höher siedenden Stoffen (Methan, Argon) und der Erzeugung eines Kohlenmonoxidproduktes einer Rektifikationskolonne zuzuführen. Vorzugsweise wird die gesamte verfügbare kohlenmonoxidreichen Flüssigfraktion dabei teilverdampft und am Kopf der Rektifikationskolonne als Rücklauf aufgegeben. Um eine höhere Produktreinheit zu erziele, sieht eine Variante des erfindungsgemäßen Verfahrens sieht vor, dass der Teil der nach dem letzten Entspannungsschritt anfallenden kohlenmonoxidreichen Flüssigfraktion, der nicht für die Erzeugung von Spitzenkälte benötigt wird, in einen ersten und einen zweiten Teilstrom aufgeteilt wird, wobei der erste Teilstrom verdampft und als Zwischeneinspeisung der Rektifikationskolonne aufgegeben wird, während der zweite Teil ohne Anwärmung als direkter Rücklauf zum Kopf der Rektifikationskolonne geführt wird.

Zur Entspannung der ersten wasserstoffreichen Gasfraktion kann jede Einrichtung verwendet werden, die nach dem Stand der Technik zur kälteleistenden Entspannung von Gasen verwendet wird. Vorzugsweise wird die erste wasserstoffreiche Gasfraktion jedoch über eine Entspannungsturbine kälteleistend entspannt.

Weiterhin betrifft die Erfindung eine Vorrichtung zur Zerlegung eines vorwiegend aus Wasserstoff und Kohlenmonoxid bestehenden Einsatzgases, aufweisend zumindest einen Wärmetauscher, in dem das Einsatzgas gegen anzuwärmende Verfahrensströme abkühl- und partiell kondensierbar ist, einen Abscheider, in dem das bei der partiellen Kondensation des Einsatzgases gebildete zweiphasige Stoffgemisch in eine erste wasserstoffreiche Gas- und in eine erste kohlenmonoxidreiche, Wasserstoff enthaltende Flüssigfraktion auftrennbar ist, ein Entspannungsorgan, über das die erste wasserstoffreiche Gasfraktion kälteleistend entspannbar ist, eine Einrichtung zur kälteleistenden Entspannung der ersten kohlenmonoxidreichen, Wasserstoff enthaltenden Flüssigfraktion sowie eine Einrichtung zur Bildung eines Rückführgases, in der ein Teil der bei der Entspannung entstehenden, vorwiegend aus Kohlenmonoxid bestehenden Flüssigfraktion zur Absenkung des Partialdruckes mit einer bei der Entspannung erzeugbaren wasserstoffreichen Gasfraktion misch- und verdampfbar ist, sowie einen Verdichter, über den das Rückführgas in das Einsatzgas rückführbar ist.

Die gestellte Aufgabe wird vorrichtungsseitig erfindungsgemäß dadurch gelöst, dass die Einrichtung zur kälteleistende Entspannung der ersten kohlenmonoxidreichen, Wasserstoff enthaltenden Flüssigfraktion als Entspannungskaskade ausgeführt ist, wobei die Stufen der Kaskade jeweils ein einstellbares Drosselorgan und einen Abscheider zur Trennung der bei der Entspannung der kohlenmonoxidreichen, Wasserstoff enthaltenden Flüssigfraktion über das Drosselorgan entstehenden zweiphasigen Stoffgemisches aufweisen, und wobei zumindest in der ersten Stufe der Kaskade die kohlenmonoxidreiche, Wasserstoff enthaltende Flüssigfraktion auf einen Druck entspannbar ist, der größer oder gleich dem stromabwärts des Entspannungsorgans herrschenden Druck ist.

Eine bevorzugte Ausgestaltung der erfindungsgemäßen Vorrichtung sieht vor, dass die Entspannungskaskade dreistufig ausgeführt ist, wobei in den beiden letzten Stufen eine kohlenmonoxidreiche, Wasserstoff enthaltenden Flüssigfraktion jeweils auf einen Druck entspannbar ist, der kleiner ist als der stromabwärts des Entspannungsorgans herrschende Druck.

Eine zweckmäßige Ausgestaltung der erfindungsgemäßen Vorrichtung sieht zwei getrennte Wärmetauscher vor, in denen das Einsatzgas abkühl- und partiell kondensierbar ist, und die vorzugsweise als Plattenwärmetauscher ausgeführt sind.

Eine weitere bevorzugte Ausgestaltung der erfindungsgemäßen Vorrichtung sieht vor, dass sie eine Rektifikationskolonne zur Abtrennung eines Kohlenmonoxidproduktes aus einer kohlenmonoxidreichen Flüssigfraktion umfasst, die einen Aufkocher zur Erzeugung von Rektifikationsdampf aufweist, der in einen Wärmetauscher integriert ist, in dem das Einsatzgas partiell kondensierbar und wenigstens ein weiterer Verfahrensstrom anwärmbar ist.

Eine andere bevorzugte Ausgestaltung der erfindungsgemäßen Vorrichtung sieht eine Entspannungsturbine vor, über die die erste wasserstoffreiche Gasfraktion kälteleistend entspannbar ist.

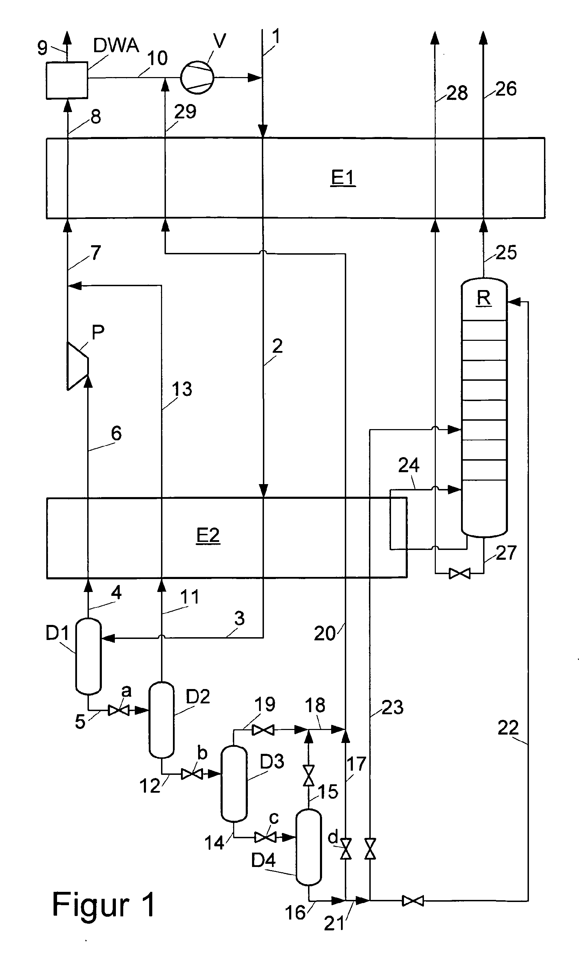

Im Folgenden soll die Erfindung anhand eines in der Figur 1 schematisch dargestellten Ausführungsbeispiels naher erläutert werden.

Das Ausführungsbeispiel zeigt eine kryogene, nach dem Prinzip des Kondensationsprozesses arbeitende Gaszerlegungsanlage, in der aus einem trockenen und kohlendioxidfreien, vorwiegend aus Kohlenmonoxid und Wasserstoff bestehenden und Verunreinigungen wie Methan und Argon in geringen Mengen aufweisenden Einsatzgas ein Wasserstoff- und ein Kohlenmonoxidprodukt erzeugt werden.

Über Leitung 1 wird das Einsatzgas mit einem Druck von ca. 38bar in den ersten, als Plattenwärmetauscher ausgeführten Wärmetauscher E1 eingeleitet und dort gegen anzuwärmende Verfahrensströme auf eine Temperatur von ca. -160°C abgekühlt, bevor sie über Leitung 2 in den ebenfalls als Plattenwärmetauscher ausgeführten Wärmetauscher E2 geführt wird. Hier wird das Einsatzgas bis auf ca. -195°C abgekühlt und durch partielle Kondensation in ein zweiphasiges Stoffgemisch umgewandelt, das anschließend über Leitung 3 in den Hochruckabscheider D1 eingeleitet und dort in eine wasserstoffreiche Gasfraktion 4 und eine kohlenmonoxidreiche, Wasserstoff enthaltende Flüssigfraktion 5 getrennt wird.

Die wasserstoffreiche Gasfraktion 4 wird im Wärmetauscher auf ca. -170°C angewärmt und über Leitung 6 der Expansionsturbine P zugeleitet, in der sie kälteleistend auf eine Druck von ca. 27 bar entspannt wird. Die entspannte wasserstoffreiche Gasfraktion 7 wird im Wärmetauscher E1 auf Umgebungstemperatur angewärmt und über Leitung 8 der Druckwechseladsorberstation DWA zugeführt, wo es gereinigt und zu einem Wasserstoffprodukt 9 aufbereitet wird. Das in der Druckwechseladsorberstation DWA anfallende Restgas 10, das zu einem erheblichen Teil aus Kohlenmonoxid besteht, wird im Verdichter V verdichtet und in das Einsatzgas 1 zurückgeführt.

Die kohlenmonoxidreiche, Wasserstoff enthaltende Flüssigfraktion 5 wird über das Drosselorgan a kälteleistend auf einen Druck entspannt, der größer oder gleich dem Druck der entspannten wasserstoffreichen Gasfraktion 7 ist, und im Abscheider D2 in eine zweite wasserstoffreiche Gasfraktion 11 und eine zweite kohlenmonoxidreiche, Wasserstoff enthaltende Flüssigfraktion 12 getrennt. Die zweite wasserstoffreiche Gasfraktion 11 wird anschließend im Wärmetauscher E2 auf ca. -170°C angewärmt und über Leitung 13 mit der entspannten wasserstoffreichen Gasfraktion 7 zusammengeführt. Alternativ kann die wasserstoffreiche Gasfraktion 13 auch unabhängig von der wasserstoffreichen Gasfraktion 7 im Wärmetauscher E1 angewärmt und nachfolgend - beispielsweise in der Druckwechseladsorberstation DWA - mit der wasserstoffreichen Gasfraktion 8 zusammengeführt werden. Die zweite kohlenmonoxidreiche, Wasserstoff enthaltende Flüssigfraktion 12 wird über das Drosselorgan b kälteleistend auf einen Druck entspannt, der niedriger ist als der Druck der entspannten wasserstoffreichen Gasfraktion 7, und in den Abscheider D3 eingeleitet. Die im Abscheider D3 abgetrennte dritte kohlenmonoxidreiche, Wasserstoff enthaltende Flüssigfraktion 14 wird über das Drosselorgan c weiter auf einen Druck von ca. 2 bar entspannt und in den Abscheider D4 geleite, wo sie in eine vierte wasserstoffreiche Gasfraktion 15 und eine ausreichend wasserstofffreie kohlenmonoxidreiche Flüssigfraktion 16 getrennt wird.

Ein Teil 17 der kohlenmonoxidreichen Flüssigfraktion 16 wird abgezweigt, über das Drosselorgan d entspannt und mit dem wasserstoffreichen Gasstrom 18 vereinigt, der aus der im Abscheider D3 gewonnenen dritten 19 und der vierten wasserstoffreiche Gasfraktion 15 gebildet wird. Die Gesamtmenge der beiden wasserstoffreichen Gasfraktionen 15 und 19 reicht aus, um den Kohlenmonoxidpartialdruck im Stoffgemisch 20 soweit zu verringert, dass sie bei tiefer Temperatur im Wärmetauscher E2 verdampft und die für den Prozess erforderliche Spitzenkälte erzeugt, um die gewünschte Temperatur im Abscheider D1 zu erreichen, die maßgeblich ist für die Reinheit der H₂-Fraktion. Das Stoffgemisch 20 wird in den beiden Wärmetauschern E1 und E2 verdampft und angewärmt und als Rückführgas 29 über Leitung 10 sowie den Verdichter V ebenfalls in das Einsatzgas 1 zurückgeführt.

Der verbleibende Rest 21 der Flüssigfraktion 16, der überwiegend aus Kohlenmonoxid besteht, daneben aber noch Methan und Argon als Verunreinigungen enthält, wird zu einem Kohlenmonoxidprodukt weiter verarbeitet, wozu er zunächst in einen ersten Teilstrom 22 und einen zweiten Teilstrom 23 aufgespalten wird. Der erste Teilstrom 22 wird direkt als Rücklauf zum Kopf der Rektifikationskolonne R geleitet, während der zweite Teilstrom 23 zunächst im Wärmetauscher E2 verdampft und dann als Zwischeneinspeisung der Rektifikationskolonne R aufgegeben wird. Die Energie zur Erzeugung des benötigten Rektifikationsdampfes wird dem kondensierenden Einsatzgas über den im Wärmetauscher E2 integrierten Aufkocher 24 entzogen. Vom Kopf der Rektifikationskolonne R wird ein Produktreinheit aufweisender Kohlenmonoxidstrom 25 abgezogen, im Wärmetaucher E1 angewärmt und als Kohlenmonoxidprodukt 26 zur Anlagengrenze geführt. Die höher siedenden Verunreinigungen, die sich im Sumpf der Rektifikationskolonne R sammeln, werden mit dem Stoffstrom 27 abgezogen. Der Stoffstrom 27 wird nach Verdampfung und Anwärmung im Wärmetauscher E1 als Brenngas 28 verwendet.

## Patentansprüche

1. Verfahren zur kryogenen Zerlegung eines vorwiegend aus Wasserstoff und Kohlenmonoxid bestehenden Einsatzgases (1), wobei
a) das Einsatzgas (1) abgekühlt und partiell kondensiert wird,
b) das bei der partiellen Kondensation gebildete zweiphasige Stoffgemisch (3) in eine erste wasserstoffreiche Gasfraktion (4) und eine erste kohlenmonoxidreiche, Wasserstoff enthaltende Flüssigfraktion (5) getrennt wird,
c) die erste wasserstoffreiche Gasfraktion (6) entspannt wird,
d) die erste kohlenmonoxidreiche, Wasserstoff enthaltende Flüssigfraktion (5) in wenigstens zwei Schritten kaskadenartig entspannt wird (a,b,c), wobei jeweils eine wasserstoffreiche Gasfraktion (11,15,19) und eine kohlenmonoxidreiche Flüssigfraktion (12,14,16) erzeugt werden,
e) ein Teil (17) einer kohlenmonoxidreichen Flüssigfraktion (16) entspannt (b) und zur Partialdruckabsenkung mit mindestens einer der bei der kaskadenartigen Entspannung gewonnenen wasserstoffreichen Gasfraktionen (18) gemischt wird,
f) das unter e) erzeugte, vorwiegend aus Wasserstoff und Kohlenmonoxid bestehende Stoffgemisch (20) verdampft, angewärmt und als Rückführgas (29) in das Einsatzgas (1) zurückgeführt wird,
**dadurch gekennzeichnet, dass** die erste kohlenmonoxidreiche,
Wasserstoff enthaltende Flüssigfraktion (5) in wenigstens einem ersten Entspannungsschritt (a) auf einen Druck entspannt wird, der größer oder gleich ist dem Druck der entspannten ersten wasserstoffreichen Gasfraktion (7), und die bei diesem Entspannungsschritt anfallende wasserstoffreiche Gasfraktion (11) der ersten wasserstoffreichen Gasfraktion (6) nach ihrer Entspannung zugemischt wird.

2. Verfahren nach Anspruch 1, **dadurch gekennzeichnet, dass** die erste kohlenmonoxidreiche, Wasserstoff enthaltende Flüssigfraktion (5) in drei Schritten (a,b,c) entspannt wird, wobei die Entspannung in den letzten beiden Entspannungsschritten (b,c) auf Drücke erfolgt, die kleiner sind als der Druck der entspannten ersten wasserstoffreichen Gasfraktion (7).

3. Verfahren nach einem der Ansprüche 1 oder 2, **dadurch gekennzeichnet, dass** der nicht für die Erzeugung von Spitzenkälte benötigte Teil (21) der im letzen Entspannungsschritt erzeugten kohlenmonoxidreichen Flüssigfraktion (16) zur Abtrennung eines Kohlenmonoxidproduktes (26) in einen ersten (23) und einen zweiten Teilstrom (22) aufgeteilt wird, wobei der erste Teilstrom (23) verdampft und als Zwischeneinspeiung einer Rektifikationskolonne (R) aufgegeben wird, während der zweite Teil (22) ohne Anwärmung als direkter Rücklauf zum Kopf der Rektifikationskolonne (R) geführt wird.

4. Verfahren nach einem der Ansprüche 1 bis 3, **dadurch gekennzeichnet, dass** die erste wasserstoffreiche Gasfraktion (6) über eine Entspannungsturbine kälteleistend entspannt wird.

5. Vorrichtung zur Zerlegung eines vorwiegend aus Wasserstoff und Kohlenmonoxid bestehenden Einsatzgases (1), aufweisend zumindest einen Wärmetauscher (E1,E2), in dem das Einsatzgas (1) gegen anzuwärmende Verfahrensströme abkühl- und partiell kondensierbar ist, einen Abscheider (D1), in dem das bei der partiellen Kondensation des Einsatzgases (1) gebildete zweiphasige Stoffgemisch (3) in eine erste wasserstoffreiche Gas- (4) und in eine erste kohlenmonoxidreiche, Wasserstoff enthaltende Flüssigfraktion (5) auftrennbar ist, ein Entspannungsorgan (P), über das die erste wasserstoffreiche Gasfraktion (6) kälteleistend entspannbar ist, eine Einrichtung zur kälteleistenden Entspannung der ersten kohlenmonoxidreichen, Wasserstoff enthaltenden Flüssigfraktion (5) sowie eine Einrichtung zur Bildung eines Rückführgases (29), in der ein Teil (17) der bei der Entspannung entstehenden, vorwiegend aus Kohlenmonoxid bestehenden Flüssigfraktion (16) zur Absenkung des Partialdruckes mit einer bei der Entspannung erzeugbaren wasserstoffreichen Gasfraktion (18) misch- und verdampfbar ist, sowie einen Verdichter (V), über den das Rückführgas (29) in das Einsatzgas (1) rückführbar ist, **dadurch gekennzeichnet, dass** die Einrichtung zur kälteleistende Entspannung der ersten kohlenmonoxidreichen, Wasserstoff enthaltenden Flüssigfraktion (5) als Entspannungskaskade ausgeführt ist, wobei die Stufen der Kaskade jeweils ein einstellbares Drosselorgan (a,b,c) und einen Abscheider (D2,D3,D4) zur Trennung der bei der Entspannung der kohlenmonoxidreichen, Wasserstoff enthaltenden Flüssigfraktion über das Drosselorgan (a,b,c) entstehenden zweiphasigen Stoffgemisches (5,12,14) aufweisen, und wobei zumindest in der ersten Stufe der Kaskade die kohlenmonoxidreiche, Wasserstoff enthaltende Flüssigfraktion (5) auf einen Druck entspannbar ist, der größer oder gleich dem stromabwärts des Entspannungsorgans (P) herrschenden Druck.

6. Vorrichtung nach Anspruch 5, **dadurch gekennzeichnet, dass** die Entspannungskaskade dreistufig ausgeführt ist, wobei in den beiden letzten Stufen eine kohlenmonoxidreiche, Wasserstoff enthaltenden Flüssigfraktion (12,14) jeweils auf einen Druck entspannbar ist, der kleiner ist als der stromabwärts des Entspannungsorgans (P) herrschende Druck.

7. Vorrichtung nach einem der Ansprüche 5 oder 6, **dadurch gekennzeichnet, dass** der oder die Wärmetauscher (E1,E2) zur Abkühlung und/oder partiellen Kondensation des Einsatzgases (1) als Plattenwärmetauscher ausgeführt sind.

8. Vorrichtung nach einem der Ansprüche 5 bis 7, **dadurch gekennzeichnet, dass** sie eine Rektifikationskolonne (R) zur Abrennung eines Kohlenmonoxidproduktes (26) aus einer kohlenmonoxidreichen Flüssigfraktion (16) umfasst, die einen Aufkocher (24) zur Erzeugung von Rektifikationsdampf aufweist, der in einen Wärmetauscher (E2) integriert ist, in dem das Einsatzgas (2) partiell kondensierbar und wenigstens ein weiterer Verfahrensstrom anwärmbar ist.

9. Vorrichtung nach einem der Ansprüche 5 bis 8, **dadurch gekennzeichnet, dass** sie eine Entspannungsturbine (P) aufweist, über die die erste wasserstoffreiche Gasfraktion (6) kälteleistend entspannbar ist.
